Europäisches Patentamt

(19) European Patent Office

Office européen des brevets

(11) Numéro de publication: **0 116 488**
**B1**

(12) **FASCICULE DE BREVET EUROPÉEN**

(45) Date de publication du fascicule du brevet:
04.02.87

(21) Numéro de dépôt: 84400039.8

(22) Date de dépôt: 09.01.84

(51) Int. Cl.⁴: **B 25 B 29/02**

(54) *Appareil de vissage-dévissage, en particulier pour visser-dévisser les goujons de fixation du couvercle de la cuve d'un réacteur nucléaire.*

(30) Priorité: 28.01.83 FR 8301315

(43) Date de publication de la demande:
22.08.84 Bulletin 84/34

(45) Mention de la délivrance du brevet:
04.02.87 Bulletin 87/6

(84) Etats contractants désignés:
CH DE FR GB IT LI

(56) Documents cité:
DE-A-2 258 858
DE-B-1 276 567
FR-A-1 268 965
FR-A-1 321 826
FR-A-2 208 756
FR-A-2 274 997
FR-A-2 364 529
FR-A-2 367 574
GB-A-884 923
GB-A-992 211
US-A-3 679 173

(73) Titulaire: KLEY- FRANCE, Société Anonyme dite:, 74, Avenue Pablo Picasso, F-92000 Nanterre (FR)

(72) Inventeur: Robert, Brieuc, 26, rue Zilina, F-92000 Nanterre (FR)

(74) Mandataire: Lefebure, Gérard, Office Blétry 2, boulevard de Strasbourg, F-75010 Paris (FR)

LIBER, STOCKHOLM 1987

EP 0 116 488 B1

## Description

La présente invention concerne un appareil de vissage-dévissage, en particulier pour visser-dévisser les goujons de fixation du couvercle de la cuve d'un réacteur nucléaire, au type comprenant un bâti, au moins un ensemble de traction, au moins un ensemble de vissage-dévissage et au moins un ensemble de support pour un goujon, qui sont montés sur le bâti, ledit ensemble de traction comportant un vérin de traction dont le corps est fixé verticalement au bâti, et une tête de traction qui est reliée à la tige de piston du vérin de traction et qui est apte à saisir une partie supérieure d'un goujon de fixation pour exercer une traction verticale sur celui-ci, ledit ensemble de vissage-dévissage comportant un mécanisme d'entraînement en rotation pouvant venir en relation d'entraînement avec la partie supérieure du goujon, et ledit ensemble de support étant apte à saisir la partie supérieure du goujon pour le supporter. Le document FR-A-2 364529 décrit un tel appareil.

Dans les réacteurs nucléaires, le couvercle est fixé à la cuve de manière détachable pour permettre, de temps à autre ou périodiquement, une inspection de l'intérieur de la cuve et/ou des organes situés à l'intérieur de la cuve et pour permettre leur réparation si nécessaire. Cette fixation est effectuée par un grand nombre de goujons, en général 58 goujons dans un réacteur du type P.W.R. Usuellement, chaque goujon s'étend verticalement et comporte, dans sa partie inférieure, un filetage cylindrique prolongé par une partie tronconique lisse destinée à faciliter l'engagement du goujon dans un trou taraudé prévu dans le bord supérieur de la cuve, et, dans sa partie supérieure, un autre filetage cylindrique sur lequel est vissé un écrou de blocage.

Lors de la fixation du couvercle, on fait passer chaque goujon à travers un trou lisse du couvercle, puis chaque goujon est engagé et vissé dans l'un des trous taraudés de la cuve. Ensuite, une forte traction est exercée sur chaque goujon, puis l'écrou associé au goujon est tourné de quelques tours de façon à être mis en contact, sans serrage, avec le couvercle. Ensuite, la traction exercée sur chaque goujon est relâchée. Pour l'enlèvement du couvercle, on effectue les opérations inverses.

Les appareils de vissage-dévissage actuellement en service, qui permettent d'effectuer les opérations susmentionnées sont soit automatiques, soit semi-automatiques. Dans la version automatique, un ensemble de traction, un ensemble de vissage-dévissage et un ensemble de support sont associés a chaque goujon. Dans la version semi-automatique, un ensemble de traction est associé à chaque goujon, et il est prévu un nombre limité d'ensembles de vissage-dévissage et un nombre limité correspondant d'ensembles de support, par exemple un ou deux ensembles de chaque, qui sont amenés sélectivement et successivement en relation fonctionnelle avec les goujons.

Dans les deux versions automatique et semi-automatique, les opérations de vissage ou de dévissage des goujons sont aléatoires. En effet, du fait des tolérances de fabrication du couvercle, des trous taraudés de la cuve et de l'appareil de vissage-dévissage lui-même, les axes des éléments actifs de l'appareil de vissage-dévissage ne concordent jamais parfaitement avec les axes des trous taraudés de la cuve ou avec les axes des goujons. Il en résulte que, malgré la présence d'une partie tronconique lisse à l'extrémité inférieure de chaque goujon, il arrive souvent que le centrage du goujon ne puisse se faire automatiquement lors de l'introduction du goujon dans le trou taraudé de la cuve, et que cette opération doit être effectuée manuellement ainsi que les premiers tours de vissage du goujon. De même, lors d'une opération de dévissage d'un goujon, il arrive que les éléments actifs de l'appareil de vissage-dévissage ne puissent saisir correctement la partie supérieure du goujon et doivent être alors positionnés manuellement par rapport à celui-ci. En outre, comme les axes des vérins de traction et des autres éléments actifs de l'appareil de vissage-dévissage ne concordent pas parfaitement avec les axes des trous taraudés de la cuve, ces défauts d'alignement font que les pièces en mouvement relatif sont soumises à des contraintes qui sont irrégulièrement réparties autour de leur axe de translation ou de rotation, entraînant, par frottement, une usure irrégulière et prématurée de ces pièces.

Un autre problème réside en ce que chaque goujon doit être soumis à une forte traction à un moment donné au cours de l'opération de vissage ou de dévissage. Dans les appareils actuellement en service, cette forte traction est obtenue au moyen d'un vérin de traction ayant un unique piston de diamètre relativement important. Du fait du nombre relativement grand de goujons et du fait de leur distance mutuelle relativement faible, l'utilisation de vérins de traction de gros diamètre fait qu'il est nécessaire de disposer les vérins de traction dans des positions alternativement décalées en hauteur. En outre, étant donné que le diamètre des vérins de traction est nécessairement limité par la faible distance mutuelle entre les goujons, les vérins de traction doivent être alimentés en fluide sous une pression très élevée, en général 1500 bars ou plus, pour obtenir la force de traction requise. Ceci augmente le coût et la complexité des systèmes d'alimentation hydraulique sur le plan de la construction, de l'étanchéité et de la sécurité.

Un premier but de la présente invention est de résoudre les problèmes d'alignement par une disposition relative judicieuse de l'ensemble de traction, de l'ensemble de vissage-dévissage et de l'ensemble de support de l'appareil de vissage-dévissage.

Un second but de la présente invention est de permettre un alignement automatique des

2

différents éléments actifs de l'appareil de vissage-dévissage par rapport à l'axe du goujon ou du trou taraudé de la cuve afin de réduire, voire d'éliminer complètement les causes d'usure des pièces en mouvement relatif et afin d'éliminer toute opération manuelle de positionnement ou de centrage.

Un troisième but de la présente invention est de fournir un appareil de vissage-dévissage dans lequel les vérins de traction ont un diamètre tel qu'ils puissent être disposés circonférentiellement côte à côte, à la même hauteur, et travaillent à une pression nettement plus faible que dans les appareils antérieurement connus, tout en étant capables de fournir une force de traction aussi importante que dans les appareils antérieurement connus.

Selon la présente invention, ce premier but est atteint par le fait que la tige de piston du vérin de traction et la tête de traction sont creuses, par le fait que l'ensemble de vissage-dévissage comporte une tige creuse qui passe à travers la tige creuse du vérin de traction et à travers la tête creuse de traction, est pourvue à son extrémité inférieure d'un organe mâle d'entraînement à section transversale non circulaire et est reliée cinématiquement, à son extrémité supérieure, audit mécanisme d'entraînement en rotation, lequel est situé au-dessus du vérin de traction, et par le fait que ledit ensemble de support comprend une autre tige qui est montée à rotation, sans possibilité de mouvement axial, à l'intérieur de la tige creuse de l'ensemble de vissage-dévissage et qui est filetée à son extrémité inférieure, et un autre mécanisme d'entraînement en rotation qui est adjacent au mécanisme d'entraînement en rotation de l'ensemble de vissage-dévissage et qui est relié cinématiquement à l'extrémité supérieure de ladite autre tige.

La disposition concentrique de la tige de l'ensemble de support, de la tige creuse de l'ensemble de vissage-dévissage et de la tige creuse de piston et de la tête creuse de traction de l'ensemble de traction permet déjà d'améliorer l'alignement des divers éléments actifs de l'appareil de vissage-dévissage conformément au premier but de l'invention. L'alignement des divers éléments actifs de l'appareil de vissage-dévissage par rapport à l'axe du goujon et à l'axe du trou taraudé de la cuve peut être encore amélioré par les dispositions suivantes. La tige creuse de l'ensemble de vissage-dévissage a un diamètre extérieur plus petit que le diamètre intérieur de la tige creuse de piston du vérin de traction de manière à ménager un jeu radial substantiel entre elles, et chacun des deux mécanismes d'entraînement en rotation est relié cinématiquement à la tige correspondante par un joint d'entraînement ayant deux degrés de liberté respectivement dans deux directions perpendiculaires entre elles et à l'axe de la tige. La tige de l'ensemble de support est supportée axialement par une butée axiale sphérique et par une butée axiale à coussin d'air. En outre, la tête de traction est reliée à la tige de piston du vérin de traction par l'intermédiaire d'un joint permettant à la fois une inclinaison de l'axe de la tête de traction par rapport à celui de la tige de piston et un décalage mutuel de ces deux axes dans le sens transversal. La mise en alignement des divers éléments actifs de l'appareil de vissage-dévissage par rapport à l'axe du goujon et de ce dernier par rapport à l'axe du trou taraudé de la cuve peut être encore améliorée, comme on le verra en détail plus loin, par l'utilisation de filetages qui sont coniques sur au moins une partie de leur longueur.

Le troisième but de la présente invention peut être atteint en utilisant, comme vérin de traction, un vérin à étages, comportant plusieurs pistons fixés à intervalles réguliers sur la tige creuse de piston et dont les chambres sont alimentées en parallèle en fluide sous pression.

D'autres caractéristiques et avantages de la présente invention apparaîtront plus clairement au cours de la description qui va suivre d'une forme d'exécution de la présente invention, donnée à titre d'exemple en faisant référence aux dessins annexés sur lesquels:

Les figures 1 à 4 montrent, en partie en coupe et en partie en élévation, une partie de l'appareil de vissage-dévissage conforme à la présente invention dans diverses positions de travail, la figure 1 montrant en outre l'appareil dans sa version automatique et la figure 2 dans sa version semi-automatique; en outre, les figures 1, 2 et 3 montrent respectivement trois formes possibles pour le filetage de la partie inférieure du goujon.

La figure 5 montre, à plus grande échelle, en partie en coupe verticale et en partie en élévation, la partie supérieure de l'appareil de vissage-dévissage représenté sur les figures 1 à 4.

La figure 6 est une vue en coupe suivant la ligne VI-VI de la figure 5.

Les figures 7a et 7b, assemblées suivant la ligne A-A, montrent, à plus grande échelle, en partie en coupe verticale et en partie en élévation, la partie inférieure de l'appareil de vissage-dévissage de la figure 1.

La figure 8 est une vue en coupe suivant la ligne VIII-VIII de la figure 7b, à plus grande échelle.

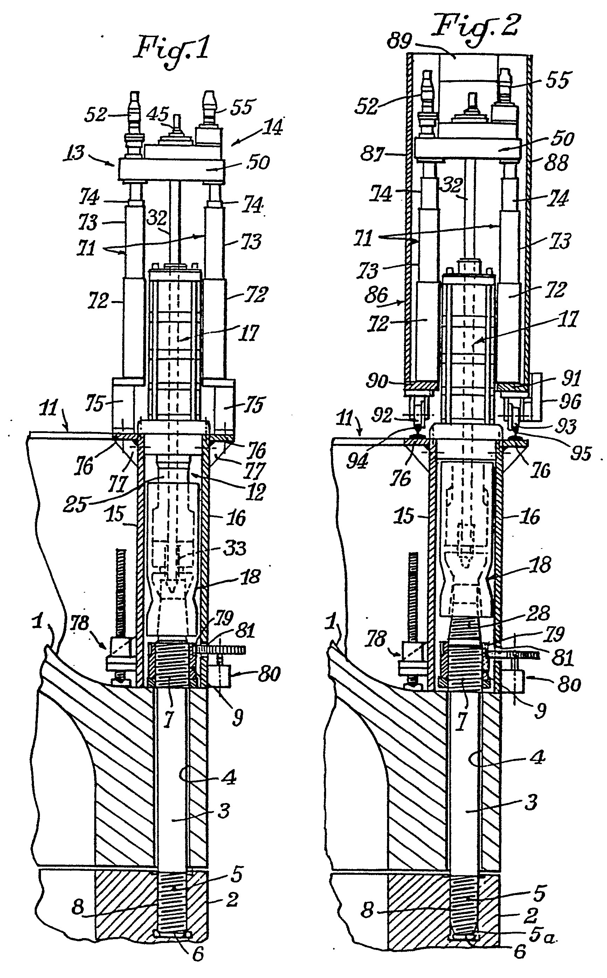

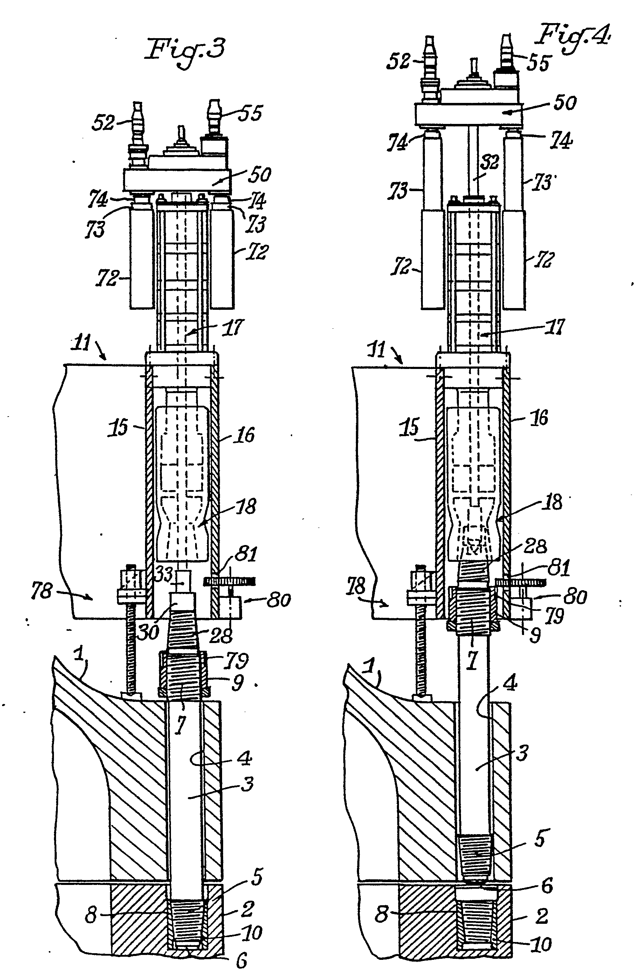

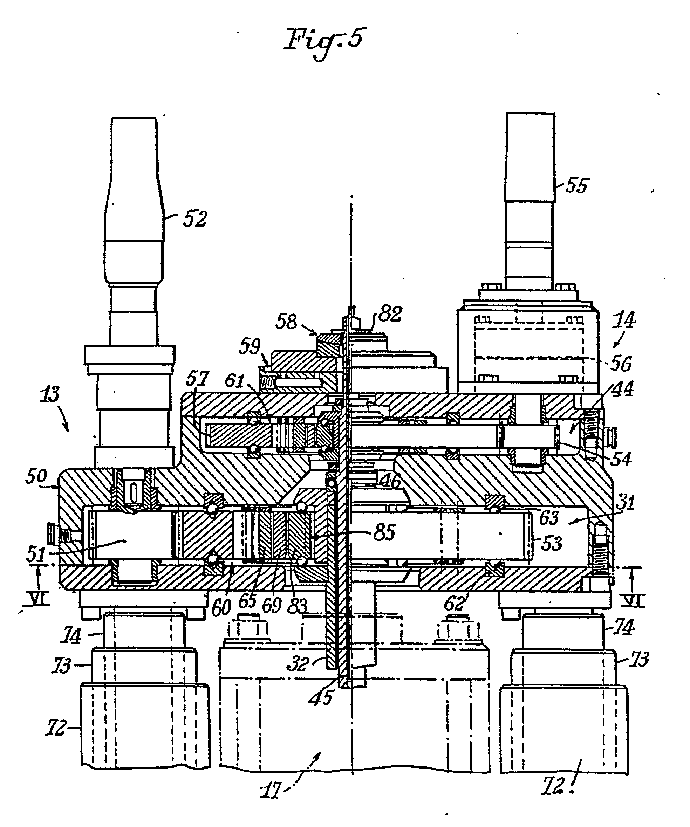

Dans les figures 1 à 4, pour des raisons de simplification, on a seulement représenté le bord périphérique du couvercle 1 et le bord périphérique de la cuve 2 d'un réacteur nucléaire. En fait, comme cela est bien connu, le couvercle 1 et la cuve 2 ont une forme de révolution autour d'un axe géométrique vertical (non montré) qui, s'il avait été montré, se trouverait du côté gauche des figures 1 à 4. Le couvercle 1 peut être fixé de manière détachable à la cuve 2 par plusieurs goujons 3 d'axe vertical, par exemple 58 goujons dans le cas d'un réacteur P.W.R. (un seul goujon a été représenté dans les figures 1 à 4), qui sont répartis régulièrement à la périphérie du couvercle 1 et de la cuve 2. Chaque goujon 3 passe à travers un trou lisse 4 percé verticalement dans le bord périphérique du couvercle 1 et comporte, dans sa partie inférieure, un premier filetage 5 prolongé par une partie tronconique lisse de centrage 6 et, dans sa partie supérieure, un second filetage 7 sur lequel est vissé un écrou 9. Le filetage 5 peut être vissé dans un trou taraudé 8 du bord périphérique de la cuve 2. Comme montré dans la figure 1, le filetage 5 peut être cylindrique sur toute sa longueur comme dans le cas des goujons habituellement utilisés dans ce domaine de la technique. Toutefois, selon une caractéristique de la présente invention, le filetage 5 peut être conique sur au moins une partie de sa longueur, afin de permettre un centrage automatique du goujon 3 par rapport au trou taraudé 8 et afin de faciliter l'engagement du filet du filetage 5 dans celui du trou taraudé 8 lorsque le goujon 3 est engagé et vissé dans le trou 8. Par filetage conique, on entend ici non pas un filetage dont le filet hélicoïdal a une hauteur ou dimension radiale, par rapport au fond du sillon hélicoîdal du filetage, décroissante vers l'extrémité inférieure du goujon 3, mais un filetage ayant un sillon hélicoïdal dont le fond est situé sur une surface conique, et ayant un filet hélicoîdal dont la hauteur ou dimension radiale, par rapport au fond du sillon hélicoîdal, est constante sur toute la longueur du filetage. Comme montré dans la figure 2, le filetage 5 peut être conique seulement dans sa partie inférieure 5a et cylindrique dans sa partie restante. En variante, le filetage 5 peut être conique sur toute sa longueur comme montré dans les figures 3 et 4. Dans ce dernier cas, comme le filetage du trou taraudé 8 est cylindrique, on prévoit un insert 10 comportant un filetage extérieur cylindrique qui est vissé dans le trou taraudé 8, et un filetage intérieur conique correspondant au filetage conique 5 du goujon 3. Non seulement cette dernière solution facilite grandement le centrage du goujon 3 et son vissage dans l'insert 10, mais encore elle facilite considérablement les opérations de réparation. En effet, si, pour une raison quelconque, le filetage intérieur de l'insert 10 est détérioré, il suffit de remplacer l'insert 10, alors que dans le cas des figures 1 et 2, il faudrait effectuer la réparation sur la cuve 2 elle-même, ce qui serait plus compliqué.

L'appareil de vissage-dévissage représenté sur la figure 1 comporte essentiellement un bâti 11 et plusieurs ensembles de traction 12 en nombre égal au nombre de goujons 3, chaque ensemble de traction 12 étant associé à l'un des goujons 3 (pour des raisons de simplification, un seul ensemble de traction 12 a été représenté sur les figures 1 à 4).

Dans la version automatique de l'appareil de vissage-dévissage, un ensemble de vissage-dévissage 13 et un ensemble de support 14 sont associés en permanence à chaque ensemble de traction 12 comme montré dans la figure 1. Par contre, dans la version semi-automatique de l'appareil de vissage-dévissage, un ou plusieurs ensembles de vissage-dévissage 13 et un ou plusieurs ensembles de support 14, par exemple deux ensembles 13 et deux ensembles 14 situés dans des positions diamétralement opposées par rapport à l'axe géométrique du couvercle 1 et de la cuve 2, peuvent être associés sélectivement et successivement aux ensembles de traction 12 d'une manière qui sera décrite plus loin en détail.

Le bâti 11 comprend un bâti principal composé de deux couronnes cylindriques et concentriques 15 et 16 qui, en service, sont placées coaxialement à l'axe du couvercle 1 et de la cuve 2. La couronne intérieure 15 est pourvue d'anneaux ou de crochets(non montres) permettant de relier l'appareil de vissage-dévissage à un palan ou autre appareil de manutention apte à amener l'appareil de vissage-dévissage au-dessus du couvercle 1.

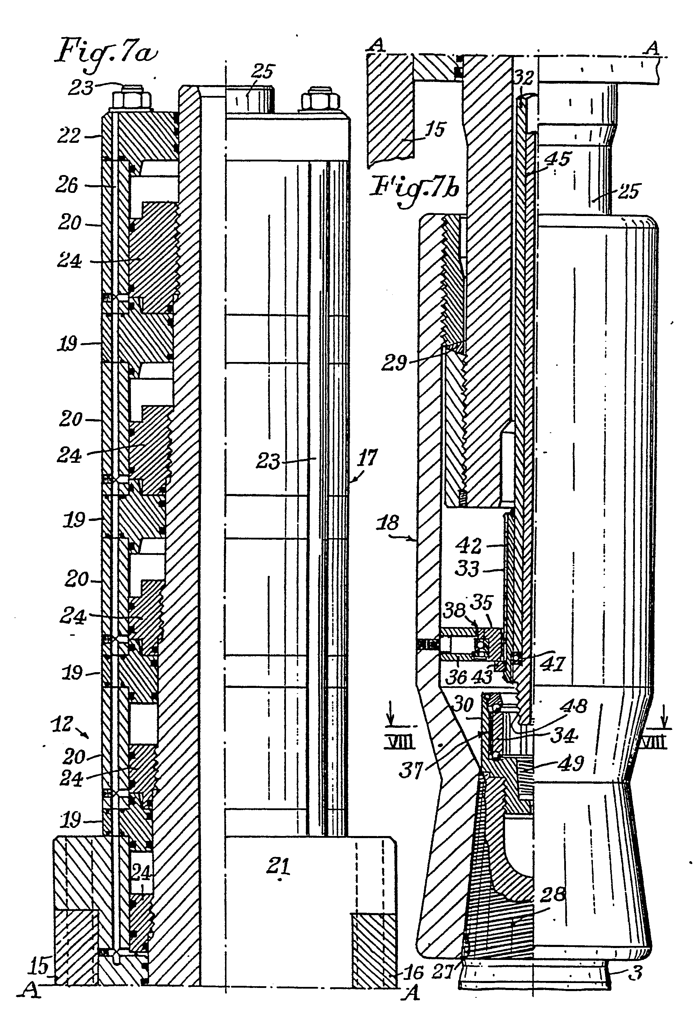

Les ensembles de traction 12 sont régulièrement répartis circonférentiellement entre les deux couronnes 15 et 16, chaque ensemble de traction étant fixé à ces deux couronnes. Comme montré dans les figures 7a et 7b, chaque ensemble de traction 12 comporte essentiellement un vérin hydraulique de traction 17 et une tête de traction 18. Le corps ou cylindre du vérin 17 est constitué par un empilage d'anneaux 19 et d'éléments tubulaires 20 alternés, qui sont serrés entre deux flasques d'extrémités 21 et 22 par des tirants 23. Le flasque inférieur d'extrémité 21 est fixé aux deux couronnes cylindriques 15 et 16. Plusieurs pistons 24, par exemple cinq pistons, sont fixés à intervalles réguliers sur la tige de piston 25 du vérin 17, qui est creuse et montée coulissante dans les flasques d'extrémité 21 et 22 et dans les anneaux 19. Les chambres annulaires situées au-dessous des pistons 24 peuvent être alimentées en parallèle en fluide sous pression à travers un passage 26, tandis que les chambres annulaires situées audessus des pistons 24 peuvent être alimentées en parallèle en fluide sous pression à travers un autre passage (non montré) semblable au passage 26. Avec une telle construction, le vérin de traction 17 peut avoir un faible encombrement dans le sens radial et fournir une force de traction très importante, tout en étant alimenté en fluide sous une pression de l'ordre de 800 bars, c'est-à-dire une pression nettement moins élevée, à forces de traction égales que dans les gros vérins à piston unique utilisés dans les appareils antérieurement connus.

Comme montré dans la figure 7b, la tête de traction 18 est creuse et à en gros une forme cylindrique. A son extrémité inférieure, la tête de traction 18 comporte un filetage intérieur 27, de préférence conique, qui peut être vissé sur un filetage extérieur 28 de forme correspondante prévu à la partie supérieure du goujon 3 au-dessus du filetage 7. A sa partie supérieure, la tête de traction 18 est reliée à la tige de piston 25 du vérin 17 par l'intermédiaire d'un joint annulaire biconvexe 29 ayant deux surfaces opposées en forme de zones sphériques. Grâce à un tel joint, la tête de traction 18 peut effectuer à la fois un mouvement limité de basculement et un déplacement transversal par rapport à la tige de piston 25 du vérin 17, de sorte que ce dernier peut travailler dans de bonnes conditions même si l'axe de la tige de piston 25 n'est pas parfaitement alignée avec l'axe du goujon 3.

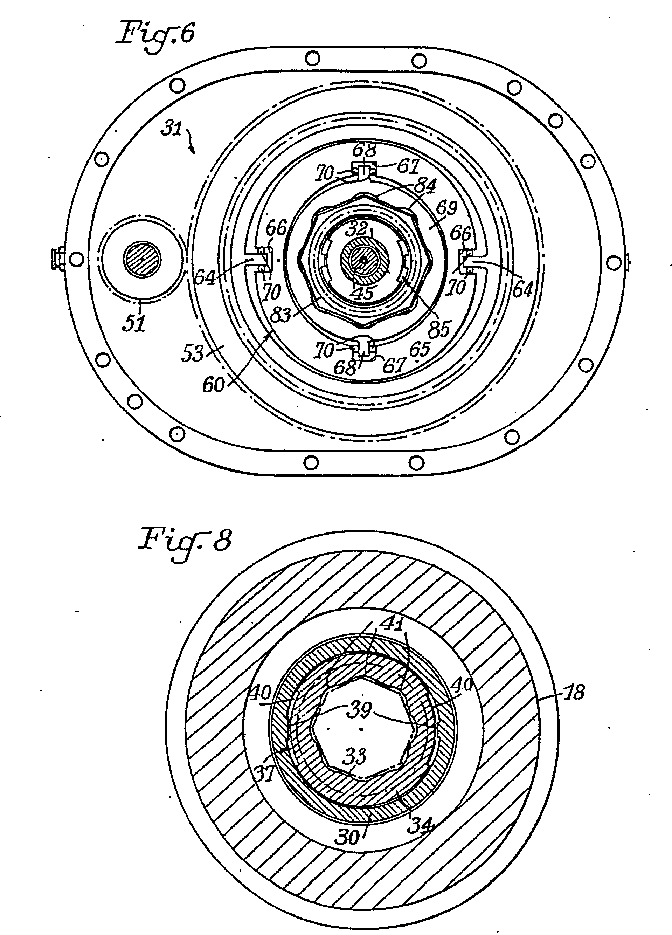

Comme montré dans les figures 5 et 6, l'ensemble de vissage-dévissage 13 comprend essentiellement un mécanisme d'entraînement en rotation 31 relié cinématiquement à l'extrémité supérieure d'une tige creuse 32, qui passe à travers la tige-creuse 25 du vérin de traction 17 et à travers la tête creuse de traction 18 et qui est pourvue, à son extrémité inférieure, d'un organe mâle d'entraînement 33 (figure 7b) à section non circulaire, par exemple une section ayant la forme d'un octogone régulier. A titre de variante, l'organe mâle d'entrainement 33 pourrait être cannelé. L'organe d'entraînement 33 peut être amené sélectivement, d'une manière qui sera décrite en détail plus loin, en relation d'entraînement soit avec un organe femelle d'entraînement 34 (figure 7b), qui est situé dans la région extrême supérieure creuse du goujon 3 et qui a une forme complémentaire de celle de l'organe mâle d'entraînement 33 pour l'entraînement en rotation du goujon 3, soit avec un organe femelle d'entraînement 35 (fig. 7b), qui a aussi une forme complémentaire de celle de l'organe mâle d'entraînement 33 et qui est relié à la tête de traction 18 dans la partie intermédiaire de celle-ci pour son entraînement en rotation. Afin de faciliter l'engagement de l'organe mâle d'entraînement 33 dans l'organe femelle d'entraînement 34 ou dans l'organe femelle d'entraînement 35, des évidements coniques de guidage 41 (figure 8) sont formés dans la face d'extrémité supérieure de l'organe femelle d'entraînement 34 et dans la face d'extrémité inférieure de l'organe femelle d'entraînement 35 à l'endroit de chacun des sommets de l'octogone de ces deux organes 34 et 35. En outre, les organes femelles d'entraînement 34 et 35 sont accouplés respectivement à une pièce 30 fixée à la partie supérieure du goujon 3 et à une pièce 36 fixée à la tête de traction 18 respectivement par des accouplements 37 et 38 ayant un jeu dans le sens circonférentiel. Plus précisément, comme cela est montré en détail dans la figure 8 à propos de l'accouplement 37 (l'accouplement 38 étant similaire à l'accouplement 37), la pièce 30 (ou la pièce 36) comporte deux dents 39 diamétralement opposées, qui sont engagées dans deux larges encoches 40 de l'organe femelle d'entraînement 34 (ou 35), autorisant ainsi un mouvement relatif limité de rotation entre les éléments 30 et 34 (ou 35 et 36). Ainsi, si les côtés de l'octogone de l'organe mâle d'entraînement 33 ne sont pas en concordance avec les côtés de l'octogone de l'organe femelle d'entraînement 34 ou 35 lors de l'engagement du premier dans le second, en venant en contact avec les évasements coniques 41 de l'organe 34 ou 35 les sommets de l'octogone de l'organe mâle d'entraînement 33 obligeront l'organe femelle d'entraînement 34 ou 35 à tourner jusqu'à ce que les côtés des octogones soient en concordance, après quoi l'organe mâle d'entrainement 33 peut être introduit complètement dans l'organe femelle d'entraînement 34 ou 35 pour entraîner ce dernier en rotation et pour entraîner en rotation la pièce 30 et le goujon 3 ou la pièce 36 et la tête de traction 38 par l'intermédiaire des dents 39. On obtient ainsi un positionnement automatique de l'organe femelle d'entraînement 34 ou 35 par rapport à l'organe mâle d'entraînement 33 lorsque le second est engagé dans le premier, sans qu'il soit nécessaire d'effectuer un positionnement manuel de ces deux éléments pour mettre les côtés de leurs octogones en concordance. Lorsque l'organe mâle d'entraînement 33 n'est pas engagé dans l'organe femelle d'entraînement 34 ou 35, les dents 39 de la pièce 30 ou 36 et les encoches 40 de la pièce 34 ou 35 sont maintenues dans la position représentée sur la figure 8 par des ressorts de rappel ou par des aimants permanents (non montrés).

L'organe mâle d'entraînement 33 comporte des rainures longitudinales 42 (fig. 7b) qui sont formées dans chacun des côtés de son octogone et qui s'étendent sur presque toute la longueur de l'organe 33 excepté dans sa partie inférieure. Une bague 43 pourvue de huit dents qui sont orientées radialement vers l'intérieur et qui sont engagées dans les rainures 42 de l'organe mâle d'entraînement 33, peut coulisser sur ce dernier. Ainsi, lorsque la bague 43 est en contact avec la face inférieure de la pièce 35 et que la tige creuse 32 est soulevée ou abaissée d'une manière qui sera décrite plus loin, la bague 43 permet de soulever la tête de traction 18 par rapport au goujon 3 ou de supporter le poids de ladite tête pendant qu'elle est abaissée.

Comme montré sur la figure 5, l'ensemble de support 14 comprend essentiellement un mécanisme d'entraînement en rotation 44 relié cinématiquement à l'extrémité supérieure d'une tige 45 qui est montée à rotation, sans possibilité de mouvement axial, au moyen de deux butées axiales 46 et 47 (voir aussi la fig. 7b) à l'intérieur de la tige creuse 32. A son extrémité inférieure, la tige 45 est pourvue d'un filetage 48, de préférence conique, pouvant être vissé dans un filetage intérieur 49 de forme correspondante, formé dans la pièce 30 au-dessous de l'organe femelle d'entraînement 34. Bien que le filetage 49 et l'organe femelle d'entraînement 34 pourraient être respectivement formé et monté directement dans l'extrémité supérieure du goujon 3, ils sont de préférence respectivement formé et monté dans la pièce 30, comme cela est montré sur la figure 7b, qui est fixée de manière détachable, par exemple par vissage, au goujon 3. De cette manière si le filetage 49 ou l'organe femelle d'entraînement 34 est endommagé pour une raison quelconque, il suffit de remplacer la pièce 30 alors qu'autrement il faudrait remplacer la totalité du goujon 3.

Les deux mécanismes d'entraînement en rotation 31 et 44 sont montés dans un carter commun 50 (fig. 1 à 5). Le mécanisme 31 comprend un pignon d'entraînement 51, qui est calé sur l'arbre de sortie d'un moteur d'entraînement 52, par exemple un moteur à air comprimé, et qui est en prise avec une roue dentée 53 qui entoure la tige creuse 32 et qui est reliée cinématiquement à cette dernière d'une manière qui sera décrite en détail plus loin. De même, le mécanisme 44 comporte un pignon d'entraînement 54 qui peut être entraîné en rotation par un moteur 55, par exemple un moteur à air comprimé, par l'intermédiaire d'un embrayage électromagnétique 56, et qui est en prise avec une roue dentée 57 qui entoure la tige 45 et qui est reliée cinématiquement à cette dernière d'une manière qui sera décrite en dètail plus loin.

Afin de permettre un alignement automatique des tiges 32 et 45 avec l'axe du goujon 3, le filetage 48 de la tige 45 et le filetage 49 de la pièce 30 sont de préférence coniques comme on l'a déjà vu plus haut. En outre, la tige 32 a un diamètre extérieur plus petit que le diamètre intérieur de la tige creuse de piston 25 du vérin 17 de manière à ménager un jeu radial substantiel entre elles comme montré dans la figure 7b. En outre, la tige 45 est supportée axialement par rapport au carter commun 50 par une butée axiale 58 formant un joint sphérique et par une butée axiale à coussin d'air 59. Enfin, chacune des deux roues dentées 53 et 57 est reliée cinématiquement à la tige correspondante 32 ou 45 par un joint d'entraînement 60 ou 61 ayant deux degrés de liberté respectivement dans deux directions perpendiculaires entre elles et à l'axe de la tige correspondante 32 ou 45 . Etant donné que les deux joints d'entrainement 60 et 61 sont semblables, on décrira seulement le joint d'entraînement 60 en faisant référence aux figures 5 et 6. La roue dentée 53 est réalisée sous la forme d'une couronne qui est montée à rotation dans le carter commun 50 au moyen de deux chemins de roulement à billes 62 et 63, et qui comporte deux dents d'entraînement 64 qui font radialement saillie vers l'intérieur dans des positions diamétralement opposées. Une deuxième couronne 65 comportant deux encoches 66 diamétralement opposées dans sa surface périphérique extérieure et deux encoches 67 diamétralement opposées dans sa surface périphérique intérieure et décalées angulairement de 90° par rapport aux encoches 66 est montée à l'intérieur de la couronne dentée 53. Les encoches 66 reçoivent les dents 64 de la couronne 53, tandis que les encoches 67 reçoivent deux autres dents d'entraînement 68, diamétralement opposées et orientées radialement vers l'extérieur, d'une troisième couronne 69 qui est montée à l'intérieur de la couronne 65 et qui est accouplée à la tige 32 (de même, la troisième couronne du joint d'entraînement 61 est accouplée à la tige 45). Des rouleaux 70 sont disposés de part et d'autre de chaque dent 64 ou 68 dans l'encoche 66 ou 67 correspondante. Ainsi, la couronne 65 peut effectuer un déplacement limité par rapport à la couronne 53 dans la direction diamétrale définie par les deux dents 64. De même, la couronne 69 peut effectuer un déplacement limité par rapport à la couronne 65 dans la direction diamétrale qui est définie par les deux encoches 67 et qui est perpendiculaire à la direction diamétrale précédente. Les éléments sont dimensionnés de telle manière que chacune des deux couronnes 65 et 69 puissent se déplacer d'environ 4 mm ou plus dans les directions diamétrales susmentionnées respectivement par rapport à la couronne 53 et par rapport à la couronne 65 de part et d'autre d'une position centrée sur l'axe de la couronne 53. Autrement dit, le centre de la couronne 69 et, par suite, l'axe des tiges 32 et 45 peut occuper n'importe quelle position à l'intérieur d'un carré d'environ 8 mm de côté centré sur l'axe de la couronne 53 ou de la couronne 57.

Dans la version automatique de l'appareil de vissage-dévissage de la présente invention, un ensemble complet de vissage-dévissage 13 et un ensemble complet de support 14 sont associés en permanence à chaque ensemble de traction 12. Dans ces conditions, la couronne 69 du joint d'entraînement 60 et la couronne correspondante du joint d'entraînement 61 peuvent être reliées rigidement ou par un accouplement permanent respectivement à la tige 32 et à la tige 45. Par contre, dans la version semiautomatique de l'appareil de vissage-dévissage de la présente invention, la couronne 69 du joint d'entraînement 60 et la couronne correspondante du joint d'entraînement 61 sont reliées cinématiquement de manière détachable respectivement à la tige 32 et à la tige 45 d'une façon qui sera décrite plus loin.

Des moyens élévateurs 71 sont montés entre le bâti 11 et le carter commun 50 pour monter et descendre à volonté les tiges 32 et 45. Comme montré dans la figure 1, les moyens élévateurs 71 peuvent être constitués par deux ensembles de vérins pneumatiques à simple effet. Chaque ensemble de vérins pneumatiques comprend trois vérins 72, 73 et 74 qui sont reliés mécaniquement en série et qui peuvent être alimentés indépendamment les uns des autres en fluide sous pression. Pour réduire l'encombrement en longueur des trois vérins 72, 73 et 74, ceux-ci sont emboîtés les uns dans les autres, c'est-à-dire que la tige de piston du vérin 72 sert de cylindre pour le vérin 73 et la tige de piston du vérin 73 sert de cylindre pour le vérin 74. La tige de piston du vérin 72 a une course d'environ 300 mm correspondant à la course de vissage du goujon 3 dans le trou taraudé 8 de la cuve 2. La tige de piston du vérin 73 a une course d'environ 115 mm correspondant à la course de vissage de la tête de traction 8 sur le filetage conique 28 du goujon 3. La tige de piston du vérin 74 a une course d'environ 70 mm correspondant à la course de vissage de la tige 45 dans le trou taraudé 49 de la pièce 30 qui est fixée à l'extrémité supérieure du goujon 3. Les tiges de piston des deux vérins 74 sont fixées au carter commun 50, tandis que les cylindres des deux vérins 72 sont respectivement fixés à deux supports 75 qui forment un châssis auxiliaire qui est lui-même supporté et fixé au bâti 11. Comme montré dans la figure 1, chacun des deux supports 75 est fixé de manière détachable à un anneau 76 qui est lui-même fixé rigidement, par exemple par soudure, à la partie supérieure de la couronne cylindrique 15 ou 16 du bâti 11, et renforcé par des goussets 77.

D'autres moyens élévateurs 78 sont fixés à la partie inférieure de la couronne cylindrique 15 pour soulever le bâti 11 à l'écart de la surface supérieure du couvercle 1 lorsqu'ils sont actionnés dans un sens, et pour abaisser les couronnes cylindriques 15 et 16 en contact avec la surface supérieure du couvercle 1 lorsqu'ils sont actionnés dans le sens opposé. Les moyens élévateurs 78 peuvent être par exemple constitués par plusieurs vérins électriques à vis (un seul d'entre eux est montré sur les figures 1 à 4), qui sont réguliérement répartis le long de la surface périphérique intérieure de la couronne cylindrique 15.

L'écrou 9 de chaque goujon 3 est pourvu, dans sa partie supérieure, d'une denture 79 avec laquelle un mécanisme d'entraînement en rotation 80 peut être amené en prise à travers une ouverture 81 formée dans la couronne cylindrique extérieure 16 comme montré dans les figures 1 à 4. Le mécanisme d'entraînement en rotation 80, qui est représenté schématiquement sous la forme d'un pignon pouvant être entraîné en rotation par un moteur à deux sens de rotation, peut être réalisé sous la forme d'un mécanisme portable, qui est amené manuellement en prise avec la denture 79 de l'écrou 9, où il peut être fixé de manière permanente à la partie inférieure de la couronne cylindrique extérieure 16 comme montré dans les figures 1 à 4. Dans ce dernier cas, un mécanisme 80 est associé à l'écrou 9 de chaque goujon 3.

Dans la version semi-automatique de l'appareil de vissage-dévissage de la présente invention, les mécanismes d'entraînement en rotation 31 et 44 et les joints d'entraînement 60 et 61 y associés peuvent être désaccouplés des tiges 32 et 45, respectivement, afin de pouvoir être sélectivement et successivement associés à d'autres tiges 32 et 45 associées à d'autres unités de traction 12. A cet effet, la tige 45 prend axialement appui sur la butée axiale sphérique 58 par l'intermédiaire d'un cavalier 82 qui est engagé de manière amovible dans une gorge circulaire formée dans la surface cylindrique extérieure de la tige 45 à son extrémité supérieure. En outre, la couronne 69 du joint d'entraînement 60 et la couronne correspondante du joint d'entraînament 61 sont reliées cinématiquement de manière détachable respectivement aux tiges 32 et 45. Etant donné que ces deux liaisons sont identiques, on décrira seulement la liaison entre la couronne 69 et la tige 32. Comme montré dans la figure 6, la couronne 69 est réalisée sous la forme d'un organe femelle d'entraînement comportant un passage central à section non circulaire, par exemple octogonale. Dans le passage central de la couronne 69 est emboîté axialement un organe mâle d'entraînement 83 qui a une forme complémentaire de celle du passage central de la couronne 69 et qui est relié à la tige 32. Ainsi, lorsque le cavalier 82 est enlevé et lorsque les vérins pneumatiques 72-74 sont actionnés pour soulever le carter 50 jusqu'à un niveau supérieur à l'extrémité supérieure de la tige 45, l'organe femelle d'entraînement 69 du joint d'entraînement 60 et l'organe femelle d'entraînement correspondant du joint d'entraînement 61 se dégagent respectivement de l'organe mâle d'entraînement 83 qui reste attaché à la tige 32, et de l'organe mâle d'entraînement correspondant du joint d'entraînement 61, qui reste attaché à la tige 45. Afin que les côtés de l'octogone de l'organe mâle d'entraînement 83 du joint d'entraînement 60 et ceux de l'organe mâle d'entraînement correspondant du joint d'entraînement 61 viennent automatiquement en concordance avec les côtés de l'octogone de l'organe femelle d'entraînement 69 du joint d'entraînement 60 et avec ceux de l'organe femelle d'entraînement correspondant du joint d'entraînement 61 et afin de faciliter par suite l'emboîtement des deux organes mâles d'entraînement susmentionnés dans les organes femelles d'entraînement correspondants lorsque le carter 50 est à nouveau abaissé dans la position représentée sur la figure 5, des évidements coniques de guidaga 84 sont formés dans la surface inférieure de l'organe femelle d'entraînement 69 et dans la surface inférieure de l'organe femelle d'entraînement correspondant du joint d'entraînement 61 à l'endroit de chacun des sommets de l'octogone de ces deux organes femelles d'entraînement. En outre, l'organe mâle d'entraînement 83 et l'organe mâle d'entraînement correspondant du joint d'entraînement 61 sont reliés respectivement à la tige 32 et à la tige 45 par un accouplement 85 qui a un jeu dans le sens circonférentiel, suivant une disposition qui est similaire à celle de l'accouplement 37 représenté sur la figure 8 et qui ne sera donc pas décrite à nouveau en détail.

Pour supporter axialement les tiges 32 et 45 en l'absence du cavalier 82 et en l'absence du carter 50, il est prévu un autre cavalier (non montré), qui est semblable au cavalier 82 et qui peut être engagé dans une gorge circulaire formée dans la surface cylindrique extérieure de la tige 32, cet autre cavalier pouvant prendre appui sur l'extrémité supérieure de la tige de piston 25 du vérin 17.

En outre, dans la version semi-automatique de l'appareil de vissage-dévissage de la présente invention, pour que les deux mécanismes d'entraînement en rotation 31 et 44 contenus dans le carter 50, les moteurs 52 et 55 et les moyens élévateurs 71 puissent être amenés en relation fonctionnelle avec les tiges 32 et 45 associées à un autre ensemble de traction 12, le carter 50, les moteurs 52 et 55 et les moyens élévateurs 71 sont montés dans un châssis auxiliaire 86 mobile par rapport au bâti principal formé par les deux couronnes cylindriques 15 et 16. Comme montré dans la figure 2, le châssis auxiliaire 86 a en gros la forme d'un portique. Les deux jambes du portique 86 sont constituées par des profilés 87 et 88 à section en U dont les parties creuses se font mutuellement face. A leur extrémité supérieure, les deux profilés 87 et 88 sont entretoisés par deux traverses 89 (une seule d'entre elles est visible dans la fig. 2). L'extrémité inférieure de chacun des deux profilés 87 et 88 est obturée par une plaque 90 ou 91 qui est soudée au profilé correspondant et sur laquelle est fixé le cylindre du vérin 72 de l'un des deux ensembles de vérins 72-74. Sous chacune des deux plaques 90 et 91 sont montées deux roues 92 et 93 (une seule de chaque est visible dans la figure 2) qui peuvent rouler sur des rails 94 ou 95 qui sont fixés sur les anneaux 76 des couronnes 15 et 16. Au moins l'une des roues, par exemple l'une des roues 93, peut être entraînée en rotation par un ensemble moteur-réducteur 96.

On décrira maintenant le fonctionnement de l'appareil de vissage-dévissage de la présente invention dans sa version automatique au cours d'un cycle de dévissage des goujons 3 en vue de l'enlèvement du couvercle 1 de la cuve 2. On rappellera que dans la version automatique, un ensemble de traction 12 un ensemble complet de vissage-dévissage 13 et un ensemble complet de support 14 sont associés à chaque goujon 3. On ne décrira donc que le fonctionnement des trois ensembles susmentionnés associés à l'un des goujons 3, étant entendu que les trois ensembles associés à chacun des autres goujons fonctionnent simultanément et de la même manière que les trois ensembles qui vont être décrits.

Pour un cycle de dévissage des goujons 3, l'appareil de vissage-dévissage de la présente invention est tout d'abord amené au moyen d'un palan ou autre appareil similaire de manutention au-dessus du couvercle 1, alors que les vis des vérins 78 sont en position sortie vers le bas, puis l'appareil de vissage-dévissage est abaissé par le palan jusqu'à ce que les extrémités inférieures des vis des vérins 78 viennent en contact avec le couvercle 1. A ce moment, les couronnes 15 et 16 se trouvent à une distance d'environ 375 mm du couvercle et la tête de traction 18 se trouve au-dessus du goujon 3 dans l'alignement de celui-ci. Ensuite, le bâti 11 est abaissé au moyen des vérins à vis 78 jusqu'à ce que les couronnes 15 et 16 viennent en contact avec le couvercle 1 et, simultanément, les tiges de piston des vérins 72, 73 et 74 sont complètement sorties. A ce moment, la tête de traction 78, qui est supportée par la tige 32 et la bague 43, se trouve juste au-dessus de la partie supérieure du goujon 3, sans que le filetage 28 de ce dernier et le filetage 27 de la tête de traction soient en contact. En outre, l'organe mâle d'entraînement 33 de la tige 32 est en relation d'entraînement avec l'organe femelle d'entraînement 35 de la tête de traction 18. Cette dernière est alors entraînée en rotation dans un premier sens par le moteur 52, le mécanisme d'entraînement 31 et la tige 32 et, simultanément, les tiges de piston des vérins 73 sont progressivement rentrées afin d'abaisser la tête de traction 18. Les mouvements combinés rotation et d'abaissement de la tête de traction 18 provoquent son vissage sur le filetage 28 du goujon 3. On notera que, même si initialement la tête de traction 18 n'était pas parfaitement alignée avec l'axe du goujon 3, elle s'aligne automatiquement avec l'axe dudit goujon au cours de cette opération de vissage du fait que les deux filetages 27 et 28 sont coniques, que la tête de traction 18 est reliée à la tige creuse de piston 25 par le joint annulaire biconvexe 29 et que la tige 32 est mobile transversalement dans une certaine mesure à l'intérieur du passage axial de la tige creuse de piston 25.

Après que la tête de traction 18 a été complétement vissée sur le filetage 28 du goujon 3 comme montré dans la figure 1, le vérin de traction 17 est actionné afin d'exercer sur le goujon 3 une traction dirigée vers le haut. Pendant que le goujon 3 est soumis à ladite traction, le mécanisme d'entraînement 80 est actionné dans un sens tel que l'écrou 9 soit tourné de quelques tours dans le sens du dévissage. Ensuite, la pression est relâchée dans le vérin de traction 17 afin de faire cesser ladite traction.

Ensuite, la tête de traction 18 est entraînée en rotation en sens inverse par le moteur 52, le mécanisme d'entraînement 31 et la tige 32 et, simultanément, les tiges de piston des vérins 73 sont progressivement sorties afin de dévisser la tête de traction 18 par rapport au goujon 3. Quand les tiges de piston des vérins 73 sont complètement sorties, la ête de traction 18 se trouve alors dans la position représentée sur la figure 2. A ce moment, le bâti 11 est soulevé d'environ 375 mm au moyen des vérins à vis 78 comme montré dans la figure 3. Ensuite, les tiges de piston des vérins 72 et 73 sont complètement rentrées afin d'abaisser les tiges 32 et 45 jusqu'à proximité immédiate de l'extrémité supérieure du goujon 3. Ensuite, la tige 45 est entraînée en rotation dans un premier sens par le moteur 55, l'embrayage électromagnétique 56 et le mécanisme d'entraînement 44 et, simultanément, les tiges de piston des vérins 74 sont progressivement rentrées afin d'abaisser plus encore les tiges 32 et 45. Ce mouvement d'abaissement des tiges 32 et 45 a pour effet, d'une part d'engager l'organe mâle d'entraînement 33 dans l'organe femelle d'entraînement 34 (mais ceci ne produit aucun effet d'entraînement sur le goujon 3 puisque, à ce moment, la tige 32 ne tourne pas) et, d'autre part, d'engager le filetage conique 48 de la tige 45 dans le filetage conique 49 de la pièce 30. Les mouvements combinés de rotation et d'abaissement de la tige 45 provoquent le vissage du filetage 48 dans le filetage 49. Là encore, on notera que, même si les tiges 32 et 45 ne sont pas parfaitement alignées avec l'axe du goujon 3, elles s'alignent automatiquement avec l'axe dudit goujon au cours de cette opération de vissage du fait que les filetages 48 et 49 sont coniques et que la tige 32 peut se déplacer transversalement dans une certaine mesure à l'intérieur du passage axial de la tige creuse de piston 25, ce déplacement transversal de la tige 32 étant en outre autorisé par la butée axiale sphérique 58, la butée axiale à coussin d'air 59 et les deux joints d'entraînement 60 et 61 à deux degrés de liberté.

Après que les tiges des pistons des vérins 74 ont été complétement rentrées, le moteur 55 est arrêté et l'embrayage électromagnétique 56 est débrayé. Ensuite, le goujon 3 est entraîné en rotation dans le sens du dévissage par le moteur 52, le mécanisme d'entrainement 51 et la tige 32 et, simultanément, les tiges des pistons des vérins 72 sont progressivement sorties afin de soulever le goujon 3. Les mouvements combinés de rotation et de montée du goujon 3 ont pour effet de le dévisser et de le faire sortir du trou taraudé 8 de la cuve 2. Quand les tiges de piston des vérins 72 ont été complètement sorties, le goujon 3 (ainsi que tous les autres goujons) occupe la position représentée dans la figure 4. A ce moment, le cycle de dévissage des goujons 3 est terminé. L'appareil de vissage-dévissage et éventuellement le couvercle 1 peuvent être alors emmenés à l'écart de la cuve 2 au moyen du palan susmentionné.

Pour visser les goujons 3 dans les trous taraudés 8 de la cuve 2, on effectue les opérations inverses de celles qui ont été décrites ci-dessus. On notera simplement que si on utilise des goujons 3 dont le filetage inférieur 5 a une forme conique, comme montré dans les figures 3 et 4, l'engagement des filetages coniques 5 dans les trous taraudés 8 s'en trouvera grandement facilité.

L'appareil de vissage-dévissage de la présente invention, dans sa version semi-automatique, fonctionne de manière semblable à celle décrite plus haut, excepté que, dans ce cas, par exemple pour le cycle de dévissage des goujons 3, les vérins 72, 73 et 74, les moteurs 52 et 55 et le carter 50 sont amenés en relation fonctionnelle successivement avec chaque ensemble de traction 12 et avec les tiges 32 et 45 y associées au moyen du châssis auxiliaire mobile 86 (fig. 2), afin de visser successivement chaque tête de traction 18 sur le filetage 28 du goujon 3 correspondant. Une fois que toutes les têtes de traction 18 ont été vissées sur les goujons 3, les vérins de traction 17 sont actionnés comme précédemment pour exercer une traction sur tous les goujons 3, puis les écrous 9 sont dévissés un par un ou simultanément au moyen d'un ou plusieurs mécanismes d'entrainement 80. Ensuite, la pression est relâchée simultanément dans tous les vérins 17 pour faire cesser ladite traction. Ensuite, les vérins 72, 73 et 74, les moteurs 52 et 55 et le carter 50 sont amenés en relation fonctionnelle successivement avec chaque ensemble de traction 12 et avec les tiges 32 et 45 y associées afin de dévisser chaque tête de traction 18 par rapport au goujon 3 correspondant, puis de dévisser chaque goujon 3 par rapport à la cuve 2, par des opérations semblables à celles décrites plus haut, et ceci goujon après goujon.

Un dispositif de sécurité peut être notamment prévu pour mettre tous les vérins de traction 17 à l'échappement si l'une quelconque des têtes de traction 18 n'est pas accrochée sur le goujon 3 correspondant ou s'en détache, ou si celui-ci n'est pas vissé dans le trou taraudé 8 correspondant de la cuve 2 ou s'en détache, pendant que les vérins de traction 17 sont actionnés. A cer effet, chaque vérin de traction 17 peut être équipé d'une soupape de sécurité (non montrée) susceptible d'être ouverte par le piston du vérin si celui-ci arrive en fin de course de traction, pour mettre ce vérin (et, par suite, tous les autres vérins 17, puisqu'ils sont alimentés en parallèle) à l'échappement.

En outre, la couronne cylindrique extérieure 16 a de préférence une épaisseur plus grande que celle de la couronne cylindrique intérieure 15, de telle façon que le bâti 11 qui supporte les vérins de traction 17 se déforme en demi-barrique lorsque lesdits vérins sont actionnés. Ceci permet de compenser la déformation du couvercle 1 qui se bombe pendant la mise en tension des goujons 3, et, par suite, de maintenir le parallélisme entre l'axe de chaque vérin de traction 17 et l'axe du goujon 3 correspondant malgré la déformation du couvercle 1.

**Revendications**

1.- Appareil de vissage-dévissage, en particulier pour visser-dévisser les goujons (3) de fixation du couvercle (1) de la cuve (2) d'un réacteur nucléaire, comprenant un bâti (11), au moins un ensemble de traction (12), au moins un ensemble de vissage-dévissage (I3) et au moins un ensemble de support (I4) pour un goujon (3), qui sont montés sur le bâti, ledit ensemble de traction (I2) comportant un vérin de traction (I7) dont le corps est fixé verticalement au bâti et une tête de traction (I8) qui est reliée à la tige de piston (25) du vérin de traction et qui est apte à saisir une partie supérieure d'un goujon de fixation (3) pour exercer une traction verticale sur celui-ci, ledit ensemble de vissage-dévissage (I3) comportant un mécanisme d'entraînement en rotation (31) pouvant venir en relation d'entraînement avec la partie supérieure du goujon (3), et ledit ensemble de support (I4) étant apte à saisir la partie supérieure du goujon (3) pour le supporter, caractérisé en ce que la tige de piston (25) du vérin de traction (17) et la tête de traction (18) sont creuses, en ce que l'ensemble de vissage-dévissage (13) comporte une tige creuse (32), qui passe à travers la tige creuse du vérin de traction et à travers la tête creuse de traction, est pourvue à son extrémité inférieure d'un organe mâle d'entraînement (33) à section transversale non circulaire et est reliée cinématiquement, à son extrémité supérieure, audit mécanisme d'entraînement en rotation (31), lequel est situé au-dessus du vérin de traction (17), et en ce que ledit ensemble de support (14) comprend une autre tige (45), qui est montée à rotation, sans possibilité de mouvement axial, à l'intérieur de la tige creuse (32) de l'ensemble de vissage-dévissage (13) et qui est filetée (en 48) à son extrémité inférieure, et un autre mécanisme d'entraînement en rotation (44), qui est adjacent au mécanisme d'entraînement en rotation (31) de l'ensemble de vissage-dévissage (13) et qui est relié cinématiquement à l'extrémité supérieure de ladite autre tige (45).

2.- Appareil selon la revendication 1, caractérisé en ce que les deux mécanismes d'entraînement en rotation (31 et 44) sont montés dans un carter commun (50), et l'ensemble de support (14) comprend en outre des moyens élévateurs (71) montés entre le bâti (11) et le carter commun (50).

3.- Appareil selon la revendication 2, caractérisé en ce que les moyens élévateurs (71) comportent au moins un ensemble de vérins (72-74) reliés mécaniquement en série, ayant des courses respectives prédéterminées et pouvant être alimentés indépendamment les uns des autres en fluide sous pression.

4.- Appareil selon la revendication 2 ou 3, caractérisé en ce qu'il comprend d'autres moyens élévateurs (78), qui sont fixés à la partie inférieure du bâti (11) pour soulever celui-ci par rapport à une face d'appui.

5- Appareil selon l'une quelconque des revendications 2 à 4, caractérisé en ce que la tige creuse (32) de l'ensemble de vissage-dévissage (13) a un diamètre extérieur plus petit que le diamètre intérieur de la tige creuse de piston (25) du vérin de traction (17), de manière à menager un jeu radial substantiel entre elles, et en ce que la tige (45) de l'ensemble de support (14) est supportée axialement, par rapport au carter commun (50), par une butée axiale (58) formant un joint sphérique et par une butée axiale à coussin d'air (59).

6.- Appareil selon la revendication 5, caractérisé en ce que chacun des deux mécanismes d'entraînement en rotation (31 et 44) est relié cinématiquement à la tige correspondante (32 ou 45) par un joint d'entraînement (60 ou 61) ayant deux degrés de liberté respectivement dans deux directions perpendiculaires entre elles et à l'axe de la tige (32 ou 45).

7. Appareil selon l'une quelconque des revendications 1 à 6, caractérisé en ce que la tête de traction (18) a en gros une forme cylindrique, est filetée intérieurement (en 27) à sa partie inférieure et est reliée, à sa partie supérieure, à la tige creuse (25) du vérin de traction (17) par l'intermédiaire d'un joint annulaire biconvexe (29) ayant deux surfaces opposées en forme de zones sphériques.

8.- Appareil selon la revendication 7, caractérisé en ce que la tête de traction (18) comporte, dans sa partie intermédiaire, un organe femelle d'entraînement en rotation (35) ayant une forme complémentaire de celle de l'organe mâle d'entraînement (33) de la tige creuse (32) de l'ensemble de vissage-dévissage (13).

9.- Appareil selon la revendication 8, caractérisé en ce que l'"organe femelle d'entrainement (35) de la tête de traction (18) est accouplé cinématiquement à la tête de traction par un accouplement (38) ayant un jeu dans le sens circonférentiel.

10.- Appareil selon l'une quelconque des revendications 7 à 9, caractérisé en ce que le filetage (48) de ladite autre tige (45) et le filetage intérieur (27) de la tête de traction (18) sont coniques sur au moins une partie de leur longueur.

11.- Appareil selon l'une quelconque des revendications 2 à 10, caractérisé en ce que le bâti (11) comprend un bâti principal comportant deux couronnes cylindriques et concentriques (15 et 18) auxquelles sont fixés plusieurs ensembles de traction (12), qui sont régulièrement répartis circonférentiellement entre les deux couronnes cylindriques (15 et 16), et un châssis auxiliaire (75 ou 86), qui est supporté par les deux couronnes (15 et 16) et auquel sont fixés les moyens élévateurs (71).

12.- Appareil selon la revendication 11, caractérisé en ce que à chaque ensemble de traction (12) est associé un ensemble complet de vissage-dévissage (13) et un ensemble complet de support (14).

13.- Appareil selon les revendications 6 et 11, caractérisé en ce que le bâti principal (15, 16) comporte deux chemins de roulement (94 et 95), en ce que le châssis auxiliaire (86) est pourvu de roues (92 et 93) permettant son déplacement sur les chemins de roulement (94 et 95), et en ce que les deux joints d'entraînement (60 et 61) sont reliés cinématiquement de manière détachable aux tiges correspondantes (32 et 45), de telle façon que les deux mécanismes d'entraînement (31 et 44) puissent être associés sélectivement et successivement à d'autres tiges (32 et 45) associées à d'autres ensembles de traction (12).

14.- Appareil selon la revendication 13, caractérisé en ce que chacun des deux joints d'entraînement (60 et 61) est relié cinématiquement à la tige correspondante (32 ou 45) par un organe femelle d'entrainement (69) à section non circulaire, par un organe mâle d'entraînement (83) qui a une forme complémentaire de celle de l'organe femelle d'entraînement (69) et qui est emboîté axialement dans ce dernier, et par un accouplement (85), qui est situé entre l'organe mâle d'entraînement (83) et la tige correspondante (32 ou 45) et qui a un jeu dans le sens circonférentiel.

15.- Appareil selon l'une quelconque des revendications 1 à 14, caractérisé en ce que le vérin de traction (17) est constitué par un vérin à étages comportant plusieurs pistons (24) fixés à intervalles réguliers sur la tige creuse de piston (25) et dont les chambres sont alimentées en parallèle en fluide sous pression.

16.- Appareil selon l'une quelconque des revendications 1 à 15, caractérisé en ce que au moins un mécanisme d'entraînement en rotation (80) est monté à la partie inférieure du bâti (11) pour faire tourner un écrou (9) du goujon (3).

17.- Goujon utilisable avec un appareil selon l'une quelconque des revendications précédentes, comportant un premier filetage extérieur (5) dans sa partie inférieure et un second filetage extérieur (7) dans sa partie supérieure pour recevoir un écrou (9), caractérisé en ce que la partie supérieure du goujon (3) est creuse dans sa région extrême supérieure et comprend un troisième filetage extérieur (28) situé au-dessus du deuxième filetage (7) et apte à venir en prise avec le filetage intérieur (27) de la tête de traction (18), un organe femelle d'entraînement (34) situé dans la région extrême supérieure creuse du goujon et ayant une forme complémentaire de celle de l'organe mâle d'entraînement (33) de la tige creuse (32) de l'ensemble de vissage-dévissage (13), et un quatrième filetage intérieur (49) situé dans la région extrême supérieure creuse du goujon (3) au-dessous de l'organe femelle d'entraînement (34) et apte à recevoir le filetage extérieur (48) de la tige (45) de l'ensemble de support (14).

18.- Goujon selon la revendication 17, caractérisé en ce que les premier, troisième et quatrième filetages sont coniques sur au moins une partie de leur longueur.

19.- Goujon selon la revendication 17 ou 18, caractérisé en ce que l'organe femelle d'entraînement (34) du goujon (3) est relié cinématiquement à celui-ci par un accouplement (37) ayant un jeu dans le sens circonférentiel.

20.- Goujon selon l'une quelconque des revendications 17 à 19, caractérisé en ce que l'organe femelle d'entraînement (34) du goujon (3) et le quatrième filetage (49) sont portés par une pièce (30) qui est fixée coaxialement et de manière détachable au goujon (3).

**Patentansprüche**

1. Vorrichtung zum Los- und Festschrauben, insbesondere zum Los- und Festschrauben von Befestigungsbolzen (3) des Deckels (1) eines Reaktordruckgefäßes (2) eines Kernreaktors mit einem Unterteil (11), zumindest einer Zugvorrichtung (12), zumindest einer Vorrichtung zum Los- und Festschrauben (13) und zumindest einer Haltervorrichtung (14) für einen Bolzen (3), wobei sämtliche vorgenannten Vorrichtungen auf dem Unterteil montiert sind, und wobei die betreffende Zugvorrichtung (12) einen Zugzylinder (17) beinhaltet, dessen Gehäuse vertikal auf dem Unterteil angeordnet ist, und einen Zugkopf (18), der mit der Kolbenstange (25) des Zugzylinders verbunden ist und dazu geeignet ist, den oberen Teil eines Befestigungsbolzens (3) zu greifen, um eine vertikale Zugbewegung auf diesen auszuüben, wobei die bezeichneten Vorrichtungen zum Los- und Festschrauben (13) einen Antriebsmechanismus für die Drehbewegung (31) umfassen, der in Antriebsverbindung mit dem oberen Teil des Bolzens (3) kommt, und wobei die bezeichnete Haltervorrichtung (14) dazu vorgesehen ist, den oberen Teil des Bolzens (3) zu greifen, um diesen zu halten, dadurch gekennzeichnet, daß die Kolbenstange (25) des Zugzylinders (17) und der Zugkopf (18) hohl sind, und daß die Vorrichtung zum Los- und Festschrauben (13) eine Stange mit einem Hohlraum (32) umfaßt, die die hohle Stange des Zugzylinders und den hohlen Zugkopf durchquert und dann an ihrem unteren Ende mit einer Antriebssteckvorrichtung (33) versehen ist, die über einen nicht kreisförmigen Querschnitt verfügt und kinematisch an ihrem oberen Ende mit dem bezeichneten Antriebsmechanismus für die Drehbewegung (31) verbunden ist, welche oberhalb des Zugzylinders (17) angeordnet ist, und daß die bezeichnete Haltervorrichtung (14) eine weitere Stange (45) umfaßt, die drehbar ohne die Möglichkeit einer Axialbewegung im Inneren der hohlen Stange (32) der Vorrichtung zum Los- und Festschrauben (13) angeordnet ist und an ihrem unteren Ende über ein Gewinde (in 48) verfügt, sowie über einen weiteren Antriebsmechanismus für die Drehbewegung (44), der sich neben dem Antriebsmechanismus für die Drehbewegung (31) der Vorrichtung zum Los- und Festschrauben (13) befindet und kinematisch mit dem oberen Ende der bezeichneten anderen Stange (45) verbunden ist.

2. Vorrichtung nach Anspruch 1, dadurch gekennzeichnet, daß die beiden Antriebsmechanismen für die Drehbewegung (31 un 44) in einem gemeinsamen Gehäuse (50) angeordnet sind und die Haltervorrichtung (14) außerdem Hubmittel (71) umfaßt, die zwischen dem Unterteil (11) und dem gemeinsamen Gehäuse (50) angeordnet sind.

3. Vorrichtung nach Anspruch 2, dadurch gekennzeichnet, daß die Hubmittel (71) zumindest eine Zylindereinheit (72 bis 74) umfassen, wobei die Zylinder mechanisch in Reihe miteinander verbunden sind und jeweils über einen vorgegebenen Hub verfügen, und unabhängig voneinander mit einer Flüssigkeit unter Druck gespeist werden.

4. Vorrichtung nach den Ansprüchen 2 und 3, dadurch gekennzeichnet, daß diese über weitere Hubmittel (78) verfügt, die am unteren Teil des Unterteils (11) befestigt sind, um diese im Verhältnis zu einer Auflagefläche anzuheben.

5. Vorrichtung nach einem der Ansprüche 2 bis 4, dadurch gekennzeichnet, daß die hohle Stange (32) der Vorrichtung zum Los- und Festschrauben (13) einen Außendurchmesser aufweist, der geringer ist als der Innendurchmesser der hohlen Kolbenstange (25) des Zugzylinders (17), so daß ein beträchtliches Spiel zwischen diesen gegeben ist, und daß die Stange (45) der Haltervorrichtung (14) im Verhältnis zu dem gemeinsamen Gehäuse (50) axial gehalten wird, und zwar mit Hilfe eines Axiallagers (58) das ein Kugelgelenk bildet und mit Hilfe eines Axiallagers mit Luftkissen (59).

6. Vorrichtung nach Anspruch 5, dadurch gekennzeichnet, daß jeder der beiden Antriebsmechanismen für die Drehbewegung (31 und 44) kinematisch mit der entsprechenden Stange (32 oder 45) über ein Antriebsgelenk (60 oder 61) mit zwei Freiheitsgraden in zwei senkrechte Richtungen zwischen diesen und der Achse der Stange (32 oder 45) verbunden ist.

7. Vorrichtung nach einem der Ansprüche 1 bis 6, dadurch gekennzeichnet, daß der Zugkopf (18) insgesamt eine zylindrische Form aufweist und mit einem Innengewinde (in 27) in seinem unteren Teil versehen ist und an seinem oberen Teil mit der hohlen Stange (25) des Zugzylinders (17) über ein bikonvexes ringförmiges Gelenk (29) mit zwei gegenüberliegenden Flächen, die rund sind, verbunden ist.

8. Vorrichtung nach Anspruch 7, dadurch gekennzeichnet, daß der Zugkopf (18) in seinem Zwischenstück eine Steckvorrichtung für den Antrieb (35) aufweist, die in ihrer Form die Einsteckvorrichtung des Antriebs (33) der hohlen Stange (32) der Vorrichtung zum Los- und Festschrauben (13) ergänzt.

9. Vorrichtung nach Anspruch 8, dadurch gekennzeichnet, daß die Antriebssteckvorrichtung (35) des Zugkopfs (18) kinematisch mit dem Zugkopf über eine Kupplung (38) verbunden ist, die an ihrem Umfang ein Spiel aufweist.

10. Vorrichtung nach einem der Ansprüche 7 bis 9, dadurch gekennzeichnet, daß das Gewinde (48) der bezeichneten anderen Stange (45) und das Innengewinde (27) der Zugstange (18) zumindest an einem Teil ihrer Länge konisch geformt sind.

11. Vorrichtung nach einem der Ansprüche 2 bis 10, dadurch gekennzeichnet, daß das Unterteil (11) ein Hauptteil umfaßt, das zwei zylindrisch und konzentrisch angeordnete Kronen (15 und 16) aufweist, auf denen mehrere Zugvorrichtungen befestigt sind, die gleichmäßig über den Umfang zwischen den beiden zylindrischen Kronen (15 und 16) verteilt angeordnet sind, und ein zusätzliches Gehäuse (75 oder 86), das von den beiden Kronen (15 und 16) gehalten wird und an dem die Hubmittel (71) befestigt sind.

12. Vorrichtung nach Anspruch 11, dadurch gekennzeichnet, daß jede Zugvorrichtung (12) mit einer vollständigen Vorrichtung zum Los- und Festschrauben (13) und einer vollständigen Haltervorrichtung (14) verbunden ist.

13. Vorrichtung nach den Ansprüchen 6 und 11, dadurch gekennzeichnet, daß das Hauptunterteil (15, 16) zwei Laufringe (94 und 95) umfaßt, und daß das zusätzliche Gehäuse (86) mit Rädern (92 und 93) ausgestattet ist, mit deren Hilfe eine Verschiebung auf den Laufringen (94 und 95) möglich ist, und daß die beiden Antriebsgelenke (60 und 61) kinematisch abnehmbar mit den entsprechenden Stangen (32 und 45) verbunden sind, so daß die beiden Antriebsmechanismen (31 und 44) nach Wahl und nacheinander mit anderen Stangen (32 und 45) von anderen Zugvorrichtungen (12) verbunden werden können.

14. Vorrichtung nach Anspruch 13, dadurch gekennzeichnet, daß jedes Antriebsgelenk (60 und 61) kinematisch mit der entsprechenden Stange (32 oder 45) über eine Antriebssteckvorrichtung (69) mit nicht kreisförmigem Querschnitt und einer Antriebseinsteckvorrichtung (83) mit einer hierzu passenden Form verbunden ist, wobei diese axial in die letztere eingesteckt ist und über eine Kupplung (85) verbunden wird, die sich zwischen der Einsteckvorrichtung (83) und der entsprechenden Stangs (32 oder 45) befindet, welche in bezug auf den Umfang ein Spiel aufweist.

15. Vorrichtung nach einem der Ansprüche 1 bis 4, dadurch gekennzeichnet, daß der Zugzylinder (17) aus einem Stufenzylinder besteht, der mehrere Kolben (24) aufweist, die in regelmäßigen Abständen auf der hohlen Stange des Kolbens (25) befestigt sind und deren Kammern parallel mit einer unter Druck stehenden Flüssigkeit gespeist werden.

16. Vorrichtung nach einem der Ansprüche 1 bis 5, dadurch gekennzeichnet, daß zumindest ein Antriebsmechanismus für die Drehbewegung (80) am unteren Teil des Unterteils (11) angebracht ist, um die Mutter (9) des Bolzens (3) zu drehen.

17. Bolzen zur Verwendung in einer Vorrichtung nach einem der vorstehenden Ansprüche mit einem ersten Außengewinde (5) in seinem unteren Teil und einem zweiten Außengewinde (7) in seinem oberen Teil, das zur Aufnahme der Mutter (9) dient, dadurch gekennzeichnet, daß der obere Teil des Bolzens (3) in seinem obersten Bereich hohl ist und ein drittes Außengewinde (28) umfaßt, das sich oberhalb des zweiten Gewindes (7) befindet, und in das Innengewinde (27) des Zugkopfs (18) eingreifen kann, sowie eine Antriebssteckvorrichtung (34), die sich im obersten Bereich des Bolzens befindet, der hohl ist und eine ergänzende Form zu der Einsteckvorrichtung des Antriebs (33) der hohlen Stange (32) der Vorrichtung zum Los- und Festschrauben (13) aufweist, und ein viertes Innengewinde (49), das sich im obersten Bereich des Bolzens (3), der hohl ist, unterhalb der Antriebssteckvorrichtung (34) befindet und zur Aufnahme des Außengewindes (48) der Stange (45) der Haltervorrichtung (14) dient.

18. Bolzen nach Anspruch 17, dadurch gekennzeichnet, daß das erste, dritte und vierte Gewinde zumindest in einem Teil der Gesamtlänge konisch geformt ist.

19. Bolzen nach den Ansprüchen 17 oder 18, dadurch gekennzeichnet, daß die Antriebssteckvorrichtung (34) des Bolzens (3) kinematisch mit diesem über eine Kupplung (37) verbunden ist, die in bezug auf den Umfang ein Spiel aufweist.

20. Bolzen nach einem der Ansprüche 17 bis 19, dadurch gekennzeichnet, daß die Antriebssteckvorrichtung (34) des Bolzens (3) und das vierte Gewinde (49) über ein Teil (30) gehalten werden, das koaxial und von dem Bolzen (3) abnehmbar befestigt ist.

## Claims

1. A screwing and unscrewing apparatus, especially for screwing and unscrewing the studs (3) for securing the lid (1) of the vessel (2) of a nuclear reactor, comprising a frame (11), at least one traction assembly (12), at least one screwing/unscrewing assembly (13) and at least one support assembly (14) for a stud (3), which components are mounted on the frame, the said traction assembly (12) comprising a traction jack (17) whose body is fixed vertically to the frame and a traction head (18) which is connected to the piston rod (25) of the traction jack and which is capable of grasping the upper part of a securing stud (3) to exert vertical traction thereon, the said screwing/unscrewing assembly (13) comprising a rotary drive mechanism (31) capable of moving into a drive relationship with the upper part of the stud (3), and the said support assembly (14) being capable of grasping the upper part of the stud (3) to support it, characterized in that the piston rod (25) of the traction jack (17) and the traction head (18) are hollow, in that the screwing/unscrewing assembly (13) comprises a hollow rod (32), which passes through the hollow rod of the traction jack and through the hollow traction head, is provided at its lower end with a male drive member (33) with a non-circular cross section and is connected kinematically at its upper end with the said rotary drive mechanism (31), which mechanism is located above the traction jack (17), and in that the said support assembly (14) comprises another rod (45), which is mounted rotatingly, with no possibility of axial movement, inside the hollow rod (32) of the screwing/unscrewing assembly (13) and is threaded (at 48) at its lower end, and another rotary drive mechanism (44) which is adjacent to the rotary drive mechanism (31) of the screwing/unscrewing assembly (13) and which is connected kinematically to the upper end of the said other rod (45).

2. An apparatus according to claim 1, characterized in that the two rotary drive mechanisms (31 and 44) are mounted in a common housing (50), and the support assembly (14) additionally comprises lifting means (71) mounted between the frame (11) and the common housing (50).

3. An apparatus according to claim 2, characterized in that the lifting means (71) comprise at least one assembly of jacks (72-74) connected mechanically in series, having respective predetermined courses and being capable of being supplied independently of each other with pressurized fluid.

4. An apparatus according to claim 2 or claim 3, characterized in that it comprises other lifting means (78) which are fixed to the lower part of the frame (11) to raise said frame in relation to a support surface.

5. An apparatus according to any one of claims 2 to 4, characterized in that the hollow rod (32) of the screwing/unscrewing assembly (13) has an external diameter which is smaller than the internal diameter of the hollow piston rod (25) of the traction jack (17), so as to create substantial radial play between them, and in that the rod (45) of the support assembly (14) is supported axially in relation to the common housing (50) by an axial stop (58) forming a spherical joint and by an axial air-cushion stop (59).

6. An apparatus according to claim 5, characterized in that each of the two rotary drive mechanisms (31 and 44) is connected kinematically to the corresponding rod (32 or 45) by a drive joint (60 or 61) with two degrees of freedom respectively in two directions perpendicular to each other and to the axis of the rod (32 or 45).

7. An apparatus according to any one of claims 1 to 6, characterized in that the traction head (18) is approximately cylindrical in shape, is threaded internally (at 27) at its lower part and is connected, at its upper part, to the hollow rod (25) of the traction jack (17) through the intermediary of an annular, biconvex joint (29) with two opposing surfaces in the form of spherical zones.

8. An apparatus according to claim 7, characterized in that the traction head (18) comprises, in its intermediate part, a female rotary drive member (35) complementary in shape to the male drive member (33) of the hollow rod (32) of the screwing/unscrewing assembly (13).

9. An apparatus according to claim 8, characterized in that the female drive member (35) of the traction head (18) is coupled kinematically to the traction head by a coupling (38) exhibiting play in the circumferential direction.

10. An apparatus according to any one of claims 7 to 9, characterized in that the thread (48) on the said other rod (45) and the internal thread (27) in the traction head (18) are conical over at least part of their length.

11. An apparatus according to any one of claims 2 to 10, characterized in that the frame (11) comprises a main frame comprising two cylindrical and concentric rings (15 and 16) to which are attached several traction assemblies (12) which are regularly spaced circumferentially between the two cylindrical rings (15 and 16), and an auxiliary frame (75 or 86) which is supported by the two rings (15 and 16) and to which are attached the lifting means (71).

12. An apparatus according to claim 11, characterized in that with each traction assembly (12) there is associated a complete screwing/unscrewing assembly (13) and a complete support assembly (14).

13. An apparatus according claim 6 and claim 11, characterized in that the main frame (15, 16) comprises two rolling tracks (94 and 95), in that the auxiliary frame (86) is provided with wheels (92 and 93) permitting its displacement along these rolling tracks (94 and 95), and in that the two drive joints (60 and 61) are connected kinematically and detachably to the corresponding rods (32 and 45) in such a way that the two drive mechanisms (31 and 44) can be associated selectively and successively with other rods (32 and 45) associated with other traction assemblies (12).

14. An apparatus according to claim 13, characterized in that each of the two drive joints (60 and 61) is connected kinematically to the corresponding rod (32 or 45) by a female drive member (69) of noncircular section, by a male drive member (83) which is complementary in shape to the female drive member (69) and which is inserted axially into the latter, and by a coupling (85) which is situated between the male drive member (83) and the corresponding rod (32 or 45) and which exhibits play in the circumferential direction.

15. An apparatus according to any one of claims 1 to 14, characterized in that the traction jack (17) consists of a multistage jack comprising several pistons (24) fixed at regular intervals on the hollow piston rod (25), their chambers being supplied in parallel with pressurized fluid.

16. An apparatus according to any one of claims 1 to 15, characterized in that at least one rotary drive mechanism (80) is mounted at the lower part of the frame (11) to turn a nut (9) on the stud (3).

17. A stud to be used with an apparatus according to any one of the preceding claims, comprising a first, external thread (5) on its lower part and a second, external thread (7) on its upper part to receive a nut (9), characterized in that the upper part of the stud (3) is hollow in its upper end region and comprises a third, external thread (28) situated above the second thread (7) and capable of engaging with the internal thread (27) of the traction head (18), a female drive member (34) situated in the hollow upper end region of the stud and being complementary in shape to the male drive member (33) of the hollow rod (32) of the screwing/unscrewing assembly (13), and a fourth, internal thread (49) situated in the hollow upper end region of the stud (3) below the female drive member (34) and capable of receiving the external thread (48) on the rod (45) of the support assembly (14).

18. A stud according to claim 17, characterized in that the first, third and fourth threads are conical over at least part of their length.

19. A stud according to claim 17 or claim 18, characterized in that the female drive member (34) of the stud (3) is connected kinematically thereto by a coupling (37) exhibiting play in the circumferential direction.

20. A stud according to any one of claims 17 to 19, characterized in that the female drive member (34) of the stud (3) and the fourth thread (49) are carried by a piece (30) which is fixed coaxially and detachably to the stud (3).

0 116 488

Fig.1    Fig.2

1

Fig.3

Fig.4

# Fig.5

Fig.6

Fig.8

*Fig.7a*

*Fig.7b*